(19) Europäisches Patentamt
European Patent Office
Office européen des brevets

(11) **EP 4 717 719 A1**

(12) **EUROPEAN PATENT APPLICATION**

(43) Date of publication:
01.04.2026 Bulletin 2026/14

(21) Application number: 25204214.8

(22) Date of filing: 24.09.2025

(51) International Patent Classification (IPC):
*C08G 18/08* (2006.01)  *C08G 18/12* (2006.01)
*C08G 18/32* (2006.01)  *C08G 18/48* (2006.01)
*C08G 18/75* (2006.01)  *C09D 11/30* (2014.01)
*C08G 18/40* (2006.01)  *C08G 18/42* (2006.01)
*C08G 18/44* (2006.01)

(52) Cooperative Patent Classification (CPC):
(C-Sets available)
C08G 18/4854; C08G 18/0823; C08G 18/0866;
C08G 18/12; C08G 18/3228; C08G 18/3231;
C08G 18/4018; C08G 18/42; C08G 18/44;
C08G 18/758; C09D 11/102; C09D 11/30;
C09D 11/322; C09D 11/38; C09D 11/40        (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 JP 2024168275
27.09.2024 JP 2024168278

(71) Applicant: Nicca Chemical Co., Ltd.
Fukui-shi, Fukui 910-8670 (JP)

(72) Inventors:
• SUMITOMO, Hiroshi
Fukui, 910-8670 (JP)
• KIBE, Yoshinobu
Fukui, 910-8670 (JP)
• TSUJIAI, Yuzo
Fukui, 910-8670 (JP)
• NISHINO, Masakazu
Fukui, 910-8670 (JP)
• NITO, Ken
Tokyo, 100-7015 (JP)

(74) Representative: MFG Patentanwälte
Meyer-Wildhagen Meggle-Freund
Gerhard PartG mbB
Amalienstraße 62
80799 München (DE)

(54) **RESIN DISPERSION LIQUID FOR INKJET INK**

(57)    An object of the present invention is to provide a resin dispersion liquid before a colorant is mixed, while ensuring storage stability as a required property, improving the liquid droplet forming property of inkjet ink when applied, and enhancing the texture of the printed product.

The above object can be achieved by a resin dispersion liquid for inkjet ink comprising: a polyurethane resin having a constituent unit derived from (A) polyisocyanate, a constituent unit derived from (B) polyol, and a constituent unit derived from (C) polyamine; and water, wherein the (B) polyol includes (B1) polyether polyol and (B2) diol compound having a carboxy group and/or a carboxylate group, and the (C) polyamine includes (C1) first polyamine having two groups selected from an amino group, an imino group, and a hydrazide group, and (C2) second polyamine having three or four groups selected from an amino group, an imino group, and a hydrazide group.

EP 4 717 719 A1

(52) Cooperative Patent Classification (CPC): (Cont.)

C-Sets
**C08G 18/12, C08G 18/3228;**
**C08G 18/12, C08G 18/3231**

**Description**

TECHNICAL FIELD

The present invention relates to a resin dispersion liquid for inkjet ink.

BACKGROUND ART

In recent years, use of inkjet printers has expanded, and they are now applied to cloths (textiles) and the like in addition to printing machines of home and commercial printing.

In a method of printing a cloth using an inkjet system, liquid droplets of ink are ejected from nozzles and sprayed onto the cloth, and an image is transferred onto the cloth, thereby allowing to obtain a printed product.

Examples of inks for printing to obtain printed products include dye inks and pigment inks. The pigment inks are more advantageous than the dye inks because of high light resistance and unnecessity of post-treatments such as washing. The pigment inks usually require addition of a binder resin to fix the pigment to fibers. For example, Patent Literatures 1 and 2 disclose the inkjet ink compositions that contain polyurethane polyurea resin particles as a binder resin.

In addition, the printing method using the inkjet system has its specific problems. In the inkjet system, the ejected ink is ejected as a liquid column and then is flied as liquid droplets, but if this liquid column is separated or the like midway for some reason, a phenomenon, in which the ink column splits into main liquid droplets and satellite liquid droplets, may occur. When this phenomenon occurs, an image is transferred to an originally unintended portion on the printed product, impairing the design (clarity) of the printed product. For the purpose of improving such a liquid droplet forming property (suppressing satellite liquid droplets), a study is conducted from the perspective of a printing system in Patent Literature 2.

Citation List

Patent Literature

Patent Literature 1: JP 2020-84013 A

Patent Literature 2: JP 6776775 B

Patent Literature 3: JP 2018-015974 A

SUMMARY OF INVENTION

According to the technique of Patent Literature 1, there is a problem that a printed product has a rough texture due to the hardness derived from a binder resin, and the texture of the fibers is poorer compared to the dye inks. In addition, studying improvement of the liquid droplet forming property by an approach different from the technique of Patent Literature 2 also contributes to improvement of the design (clarity) of the printed product.

Therefore, an object of the present invention is to provide a resin dispersion liquid before a colorant is mixed, while ensuring storage stability as a required property, improving the liquid droplet forming property of inkjet ink when applied, and enhancing the texture of the printed product.

The above object can be achieved by providing a resin dispersion liquid for inkjet ink comprising: a polyurethane resin having a constituent unit derived from (A) polyisocyanate, a constituent unit derived from (B) polyol, and a constituent unit derived from (C) polyamine; and water, wherein the (B) polyol includes (B1) polyether polyol and (B2) diol compound having a carboxy group and/or a carboxylate group, and the (C) polyamine includes (C1) first polyamine having two groups selected from an amino group, an imino group, and a hydrazide group, and (C2) second polyamine having three or four groups selected from an amino group, an imino group, and a hydrazide group.

DESCRIPTION OF EMBODIMENTS

In this specification, "X to Y" regarding numerical values is used to mean "that the numerical values (X and Y) written before and after it are included as the lower limit and upper limit, respectively, and means "X or more and Y or less". When multiple "X to Y" are written, for example, when "X1 to Y1 or X2 to Y2" is written, the disclosure of each numerical value as the upper limit, the disclosure of each numerical value as the lower limit, and the combination of the upper and lower limits are all disclosed (i.e., they are legal grounds for the amendment). Specifically, all of the amendment with X1 or more, the amendment with Y2 or less, the amendment with X1 or less, the amendment with Y2 or more, the amendment with X1 to X2, the amendment with X1 to Y2, and the like must be considered legal.

In addition, unless otherwise specified, operations, measurements of physical properties and the like are measured under the conditions of room temperature (20 to 25°C) and relative humidity of 40 to 70% RH.

<Resin Dispersion Liquid>

A resin dispersion liquid for inkjet ink of the present invention comprises: a polyurethane resin having a constituent unit derived from (A) polyisocyanate, a constituent unit derived from (B) polyol, and a constituent unit derived from (C) polyamine; and water, wherein the (B) polyol includes (B1) polyether polyol and (B2) diol compound having a carboxy group and/or a carboxylate group, and the (C) polyamine includes (C1) first polyamine having two groups selected from an amino group, an imino group, and a hydrazide group, and (C2) second polyamine having three or four groups selected from an amino group, an imino group, and a hydrazide group. With such a configuration, it is possible to provide a resin dispersion liquid before a colorant is mixed, while ensuring storage stability as a required property, improving the liquid droplet forming property of inkjet ink when applied, and enhancing the texture of the printed product. In the present specification, the inkjet ink may be referred to simply as "ink".

(Polyurethane Resin)

The polyurethane resin contained in the resin dispersion liquid for inkjet ink of the present invention (also referred to simply as "polyurethane resin" in the present specification) can function as a binder resin for fixing, to fibers, a colorant (particularly a pigment) that may be contained in the inkjet ink.

(A) Polyisocyanate

A polyurethane resin of the present invention has a constituent unit derived from (A) polyisocyanate. The polyisocyanate is not particularly limited, and examples thereof include, for example, aromatic polyisocyanate compounds, aliphatic polyisocyanate compounds, and alicyclic polyisocyanate compounds. Examples of the aromatic polyisocyanate compounds include, for example, toluene diisocyanate (TDI), xylylene diisocyanate (XDI), diphenylmethane diisocyanate (MDI), naphthalene diisocyanate (NDI), and tetramethylxylylene diisocyanate. Examples of the aliphatic polyisocyanate compounds include, for example, alkylene diisocyanate such as hexamethylene diisocyanate (HDI). Here, the number of carbon atoms of alkylene in alkylene diisocyanate is suitably 2 to 10, 3 to 9, 4 to 8, or 5 to 7. Examples of the alicyclic polyisocyanate compounds include cycloalkylene diisocyanate, and dicycloalkylalkane diisocyanate. Here, the number of carbon atoms of cycloalkyl in dicycloalkylalkane diisocyanate is suitably 5 to 8, and the number of carbon atoms of alkane in dicycloalkylalkane diisocyanate is suitably 1 to 4 or 1 to 3. Specific examples of the alicyclic polyisocyanate compounds include, for example, 1,3-bis(isocyanatomethyl)cyclohexane, isophorone diisocyanate (IPDI), dicyclohexylmethane diisocyanate (H12MDI), and norbornane diisocyanate. Therefore, according to one embodiment of the present invention, polyisocyanate is one or more diisocyanate compounds selected from the group consisting of aromatic diisocyanate compounds, aliphatic diisocyanate compounds, and alicyclic diisocyanate compounds. These polyisocyanate compounds may be used alone or in combinations of two or more.

(B) Polyol

The polyurethane resin of the present invention has a constituent unit derived from (B) polyol, and the (B) polyol includes (B1) polyether polyol and (B2) diol compound having a carboxy group and/or a carboxylate group.

(B1) Polyether Polyol

In one embodiment of the present invention, examples of the (B1) polyether polyol include polyalkylene ether glycol. The number of carbon atoms of alkylene in polyalkylene ether glycol is suitably 2 to 6, 2 to 5, 2 to 4, or 3 or 4. The alkylene may be linear or branched. Specific examples of the (B1) polyether polyol include polyethylene glycol, polypropylene glycol, polytetramethylene glycol, or polyols formed by block or random copolymerization thereof.

In one embodiment of the present invention, the number average molecular weight of the (B1) polyether polyol may be 500 to 5,000, 1,000 to 4,000, or 1,500 to 3,000. The number average molecular weight was calculated by the following formula using the hydroxyl number of the (B1) polyether polyol. The hydroxyl number was determined according to JIS K 1557-1:2007, method A. Note that, the measurement of the number average molecular weights of the polyester polyol and the polycarbonate polyol that will be described later are also calculated in the same manner.

Number average molecular weight = 56110 × number of functional groups of polyol / hydroxyl number     [formula 1]

In one embodiment of the present invention, the (B) polyol may contain at least one selected from polyester polyols, polycarbonate polyols, and low molecular polyhydric alcohols within such a range that the performance of the present invention is not impaired. Here, the number average molecular weight (molecular weight) of the low molecular polyhydric alcohols may be less than 500, or 400 or less.

In one embodiment of the present invention, examples of the polycarbonate polyol include, for example, those obtained through the dealcoholization reaction, the phenol splitting reaction, and the like of one or two or more polyols selected from ethylene glycol, 1,2-propanediol, 1,3-propanediol, 1,2-butanediol, 1,3-butanediol, 1,4-butanediol, 1,5-pentanediol, 1,6-hexanediol, 3-methyl-1,5-pentanediol, neopentylglycol, 1,8-octanediol, 1,9-nonanediol, diethylene glycol, dipropylene glycol, 1,4-cyclohexanedimethanol, or ethylene oxide or propylene oxide adducts of bisphenol A, trimethylolpropane, glycerin, pentaerythritol, and the like; and one or two or more carbonates selected from diethylene carbonate, dimethyl carbonate, diethyl carbonate, diphenyl carbonate, and the like. The polycarbonate polyols may be used alone or in combinations of two or more.

In one embodiment of the present invention, examples of the polyester polyol include, for example, those obtained through the polycondensation reaction of one or two or more dibasic acids selected from phthalic acid, isophthalic acid, terephthalic acid, naphthalenedicarboxylic acid, succinic acid, malonic acid, adipic acid, sebacic acid, 1,4-cyclohexyldicarboxylic acid, maleic acid, fumaric acid, and the like; and one or two or more polyols used for synthesizing the aforementioned polycarbonate polyol. The polyester polyols may be used alone or in combinations of two or more.

In one embodiment of the present invention, the number average molecular weights of the polycarbonate polyol and the polyester polyol may be, each independently, 500 to 5,000, 1,000 to 4,000, or 1,500 to 3,000.

In one embodiment of the present invention, examples of the low molecular polyhydric alcohol include, for example, ethylene glycol, 1,4-butanediol, 1,6-hexanediol, trimethylolpropane, pentaerythritol, and sorbitol.

In one embodiment of the present invention, the mass of the (B1) polyether polyol relative to the total mass of the (B1) polyether polyol contained in (B) and the polycarbonate polyol and the polyester polyol that may be contained in (B) is 40% by mass or more, 50% by mass or more, 60% by mass or more, 70% by mass or more, 80% by mass or more, or 90% by mass or more (the upper limit is 100% by mass). When the aforementioned lower limit is satisfied, the liquid droplet forming property is improved.

In one embodiment of the present invention, the total number of moles of the low molecular polyhydric alcohol relative to the total number of moles of the (B) polyol is 50 mol% or less, 40 mol% or less, 38 mol% or less, 30 mol% or less, 20 mol% or less, 10 mol% or less, 5 mol% or less, or 1 mol% or less (the lower limit is 0 mol%). When the aforementioned upper limit is satisfied, the flexibility of the obtained polyurethane resin and the texture of the printed matter are improved.

In one embodiment of the present invention, the total mass of the low molecular polyhydric alcohol relative to the total mass of the (B) polyol is 5.0% by mass or less, 4.0% by mass or less, 3.4% by mass or less, 3.0% by mass or less, or 1.0% by mass or less (the lower limit is 0% by mass). When the aforementioned upper limit is satisfied, the flexibility of the obtained polyurethane resin and the texture of the printed matter are improved.

Note that, the (B1) polyether polyol contained in (B) and the polycarbonate polyol and the polyester polyol that may be contained in (B) usually have neither a carboxy group nor a carboxylate group.

(B2) Diol Compound Having Carboxy Group and/or Carboxylate Group

In one embodiment of the present invention, the polyurethane resin of the present invention has a constituent unit derived from (B2) diol compound having a carboxy group and/or a carboxylate group. Here, polyurethane is generally hydrophobic (lipophilic) and is not aqueous (water-dispersible). In one embodiment of the present invention, the polyurethane resin has a carboxylate group. With such an embodiment, the polyurethane resin contained in the resin dispersion liquid of the present invention may have aqueous (water-dispersible) characteristics. In one embodiment of the present invention, the number of groups selected from carboxy groups and carboxylate groups contained in one molecule of (B2) is 1, 2, or 3.

In one embodiment of the present invention, the (B2) has one alkyl group in one molecule. The number of carbon atoms of the alkyl group is suitably 1 to 6, or 1 or 2. The alkyl group is suitably linear. In one embodiment of the present invention, examples of the (B2) include, for example, 2,2-dimethylol propionic acid (DMPA), 2,2-dimethylolbutanoic acid (DMBA), or a neutralized product thereof. Such diol compounds having a carboxy group and/or a carboxylate group may be used alone or in combinations of two or more.

In one embodiment of the present invention, the total number of moles of the (B1) and the (B2) relative to the total number of moles of the (B) polyol is 50 mol% or more, more than 50 mol%, 55 mol% or more, 60 mol% or more, 65 mol% or more, 70 mol% or more, 75 mol% or more, 80 mol% or more, 85 mol% or more, 90 mol% or more, or 95 mol% or more (the upper limit is 100 mol%).

In one embodiment of the present invention, the number of moles of the (B2) relative to the total number of moles of the (B) is more than 45 mol%, 47 mol% or more, or 49 mol% or more. In one embodiment of the present invention, the number of moles of the (B2) relative to the total number of moles of the (B) is 70 mol% or less, 65 mol% or less, or 60 mol% or less. In one embodiment of the present invention, the number of moles of the (B2) relative to the total number of moles of the (B) is more than 45 mol% and 70 mol% or less, more preferably 47 to 65 mol%, and particularly preferably 49 to 60 mol%.

In one embodiment of the present invention, the total number of moles of the carboxylate group relative to the total number of moles of the carboxylate group and the carboxy group included in the polyurethane resin (i.e., a neutralization rate) is 40 mol% or more. In one embodiment of the present invention, the total number of moles of the carboxylate group relative to the total number of moles of the carboxylate group and the carboxy group included in the polyurethane resin is 40 to 100 mol%, or 50 to 80 mol%. In order to include the carboxylate group in the polyurethane resin or in order to set the total number of moles of the carboxylate group relative to the total number of moles of the carboxylate group and the carboxy group included in the polyurethane resin to a certain lower limit or higher, a method in which a diol compound having a carboxylate group as (B2) is used as a raw material, a method in which a diol compound at least a part of which is a carboxylate group, which is obtained by neutralizing at least a part of a carboxy group of the diol compound having a carboxy group as (B2), is used as a raw material, or a method in which a diol compound having a carboxy group as (B2) is used as a raw material, to obtain a prepolymer that will be described later, followed by neutralization, are exemplified. Note that, in the present invention, a method in which a prepolymer is obtained, followed by neutralization is preferable. Accordingly, in one embodiment of the present invention, the polyurethane resin has a constituent unit derived from a prepolymer having an isocyanate group at a terminal, which has a constituent unit derived from the (A) and a constituent unit derived from the (B). The details of the neutralization will be described later.

In one embodiment of the present invention, the (B) includes no alicyclic structure.

(C) Polyamine

In one embodiment of the present invention, the (C) polyamine may be used as a chain extender of a prepolymer that will be described later. As the chain extender, compounds having a hydroxy group are known (for example, trimethylolpropane, aminoethyl ethanolamine, or the like) as those in which the number of functional groups (the number of functional groups having active hydrogen) is trivalent. However, use of this tends to result in insufficient chain extension and poor liquid droplet forming property. Although there is no restriction on its use in combination with (C), it is preferable not to use it.

The polyurethane resin of the present invention has a constituent unit derived from (C) polyamine, and the (C) polyamine includes (C1) first polyamine having two groups selected from an amino group, an imino group, and a hydrazide group, and (C2) second polyamine having three or four groups selected from an amino group, an imino group, and a hydrazide group.

In one embodiment of the present invention, the (C1) may be at least one of alkylene diamine, diamine having no carbon atom, and diamine having a cycloalkane structure with 5 to 8 carbon atoms. In one embodiment of the present invention, the alkyl group of alkylene diamine may have 1 to 12 carbon atoms. In one embodiment of the present invention, diamine having a cycloalkane structure may be diaminoalkylcycloalkane, the number of carbon atoms of alkyl in diaminoalkylcycloalkane is 1 to 4, 1 to 3, or 1 or 2, and the number of carbon atoms of cycloalkane in diaminoalkylcycloalkane is 5 to 8, or 5 to 7.

In one embodiment of the present invention, examples of the (C1) include, for example, diamines such as ethylenediamine, 1,3-propanediamine, propylenediamine, 1,3-butanediamine, 1,4-butanediamine, 1,5-pentamethylenediamine, 1,6-hexamethylenediamine, diaminodicyclohexylmethane, hydrazine, piperazine, 2-methylpiperazine, isophoronediamine, norbornane (bis(aminomethyl)norbornane), 1,3-bisaminocyclohexane, 1,3-bisaminomethylcyclohexane, 1,4-bisaminomethylcyclohexane, diaminodiphenylmethane, tolylenediamine, and xylylenediamine; amido amines derived from primary diamine and monocarboxylic acid; water-soluble amine derivatives such as monoketimine of primary diamine; and hydrazine derivatives such as oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, itaconic acid dihydrazide, 1,1'-ethylene hydrazine, 1,1'-trimethylene hydrazine, and 1,1'-(1,4-butylene) dihydrazine. Among them, ethylenediamine, hydrazine, piperazine, isophoronediamine, 1,3-bisaminomethylcyclohexane, 1,4-bisaminomethylcyclohexane, and norbornane (bis(aminomethyl)norbomane) can be particularly suitably used. In one embodiment of the present invention, hydrazine or hydrazine derivatives may be in the form of a hydrate.

In one embodiment of the present invention, the (C2) is preferably represented by, for example, the general formula: $H_2N((CH_2)_nNH)_mH$ (where, n is 2 to 6, and m is 2 or 3), and specific examples thereof include diethylenetriamine, triethylenetetramine, and iminobispropylamine. Among them, diethylenetriamine and triethylenetetramine can be particularly suitably used.

The polyurethane resin of the present invention has a constituent unit derived from (C1) first polyamine having two groups selected from an amino group, an imino group, and a hydrazide group, and a constituent unit derived from (C2) second polyamine having three or four groups selected from an amino group, an imino group, and a hydrazide group, as described above. Such a configuration makes it possible to result in good liquid droplet forming property of the obtained polyurethane resin dispersion liquid.

In one embodiment of the present invention, the (C) may include polyamine, polyethylenimine, or the like, which has five or more groups selected from an amino group and an imino group. In one embodiment of the present invention, the total number of moles of (C1) and (C2) relative to the total number of moles of (C) is 80 mol% or more, 85 mol% or more, 90 mol% or more, 95 mol% or more, or 98 mol% or more (the upper limit is 100 mol%). Such a lower limit makes it possible to improve the flexibility of the printed matter. In one embodiment of the present invention, the total mass of (C1) and (C2) relative to the total mass of (C) is 80% by mass or more, 85% by mass or more, 90% by mass or more, 95% by mass or more, or 98% by mass or more (the upper limit is 100% by mass). Such a lower limit makes it possible to improve the flexibility of the printed matter.

In one embodiment of the present invention, the total number of moles of (C2) relative to the total number of moles of (C1) and (C2) is 1.0 to 96.0 mol%. Such a range makes it possible to more efficiently achieve both the liquid droplet forming property and the texture of the printed matter. In one embodiment of the present invention, the total number of moles of (C2) relative to the total number of moles of (C1) and (C2) is 2.0 mol% or more, 4.0 mol% or more, 6.0 mol% or more, 8.0 mol% or more, 10.0 mol% or more, 12.0 mol% or more, 20.0 mol% or more, 40.0 mol% or more, 60.0 mol% or more, 80.0 mol% or more, or 90.0 mol% or more. In one embodiment of the present invention, the total number of moles of (C2) relative to the total number of moles of (C1) and (C2) is 95.0 mol% or less, 85.0 mol% or less, 65.0 mol% or less, 55.0 mol% or less, 35.0 mol% or less, 25.0 mol% or less, 23.0 mol% or less, 18.0 mol% or less, 16.0 mol% or less, 14.0 mol% or less, 8.0 mol% or less, or 3.0 mol% or less. In one embodiment of the present invention, the total number of moles of (C2) relative to the total number of moles of (C1) and (C2) is preferably 4.0 to 65.0 mol% and more preferably 10.0 to 35.0 mol%.

In one embodiment of the present invention, the mass of (C2) relative to the total mass of (C1) and (C2) is 2.0 to 98.0% by mass. Such a range makes it possible to more efficiently achieve both the liquid droplet forming property and the texture of the printed matter. In one embodiment of the present invention, the mass of (C2) relative to the total mass of (C1) and (C2) is 3.0% by mass or more, 5.0% by mass or more, 10.0% by mass or more, 15.0% by mass or more, 20.0% by mass or more, 25.0% by mass or more, 30.0% by mass or more, 50.0% by mass or more, 70.0% by mass or more, or 90.0% by mass or more. In one embodiment of the present invention, the mass of (C2) relative to the total mass of (C1) and (C2) is 80.0% by mass or less, 60.0% by mass or less, 40.0% by mass or less, 30.0% by mass or less, 28.0% by mass or less, 20.0% by mass or less, 12.0% by mass or less, 8.0% by mass or less, or 4.0% by mass or less. In one embodiment of the present invention, the mass of (C2) relative to the total mass of (C1) and (C2) is preferably 2.0 to 98.0% by mass, more preferably 5.0 to 60.0% by mass and even more preferably 15.0 to 40.0% by mass .

According to one embodiment of the present invention, the total number of moles of the functional groups (an amino group, an imino group, and a hydrazide group) of (C) relative to the total number of moles of the isocyanate group of (A) is preferably 10 to 40 mol%, and more preferably 15 to 30 mol%.

In one embodiment of the present invention, 65 mol% or more, 70 mol% or more, 80 mol% or more, or 90 mol% or more of the total number of moles of all constituent units included in the polyurethane resin consists of a constituent unit derived from the (A), a constituent unit derived from the (B1), a constituent unit derived from the (B2), a constituent unit derived from the (C1), and a constituent unit derived from the (C2). In one embodiment of the present invention, preferably 65 mol% to 100 mol%, more preferably 70 mol% to 90 mol%, and even more preferably 75 mol% to 85 mol% of the total number of moles of all constituent units included in the polyurethane resin consists of a constituent unit derived from the (A), a constituent unit derived from the (B1), a constituent unit derived from the (B2), a constituent unit derived from the (C1), and a constituent unit derived from the (C2). According to one embodiment of the present invention, preferably, the polyurethane resin does not substantially contain a crosslinking group (for example, an isocyanate group). According to one embodiment of the present invention, in order to obtain a polyurethane resin that does not substantially contain an isocyanate group, for example, when the chain of a urethane prepolymer containing an isocyanate group at a terminal is extended using a chain extender, use of a chain extender so that the isocyanate group does not remain is exemplified.

In one embodiment of the present invention, the acid number of the polyurethane resin is 4 to 32 mg KOH/g, or 5 mg KOH/g or more and less than 30 mg KOH/g, from the viewpoints of the storage stability, the liquid droplet forming property, and the texture (flexibility) of the printed matter. Note that, the acid number can be calculated from the content of the carboxy group and the carboxylate group (COO⁻) in the polyurethane resin. When the acid number of the polyurethane resin is less than 5 mg KOH/g, the storage stability of the polyurethane resin dispersion liquid may decrease, and when it is 30 mg KOH/g or more, the texture of the printed matter may deteriorate. Note that, the acid number of the polyurethane resin can be calculated in the following manner. That is, a polyurethane resin is dissolved in N,N-dimethylformamide, which is provided as a measurement sample. Then, an automatic potentiometric titrator (product name "AT510", manufactured by Kyoto Electronics Manufacturing Co., Ltd.) is used to perform potentiometric titration using a potassium hydroxide ethanolic titrant, and the acid number of the polyurethane resin can be measured.

In one embodiment of the present invention, the acid number of the polyurethane resin is 7 to 25 mg KOH/g, 10 to 24 mg KOH/g, 15 to 23 mg KOH/g, or 17 to 22 mg KOH/g. Such a range makes it possible to further improve the storage stability, the liquid droplet forming property, and the texture (flexibility) of the printed matter.

(Method for Producing Resin Dispersion Liquid Containing Polyurethane Resin and Water)

The resin dispersion liquid containing the polyurethane resin and water according to the present invention can be produced in, for example, the following manner.

(Preparation of Prepolymer)

For example, (A), and (B) containing (B1) and (B2) that reacts with (A) are allowed to react in amounts such that the amount of isocyanate groups is high, and a prepolymer is synthesized so that the terminal has the isocyanate group. Here, the total number of moles of the hydroxy group included in (B) relative to the total number of moles of the isocyanate group included in (A) is preferably 70 to 90 mol%. Within such a range, the viscosity of the isocyanate group-terminated prepolymer can be appropriately achieved, which easily results in emulsification. In addition, since the rate of the urethane bond/urea bond can be appropriately achieved, polyurethane is prevented from being excessively hardened, which can improve the flexibility and the film forming property. A specific method for producing such an isocyanate group-terminated prepolymer is not particularly limited, and the prepolymer can be produced by, for example, the conventionally known single-stage so-called one-shot method or the multi-stage isocyanate polyaddition reaction method. The reaction temperature at this time is preferably 40 to 150°C. Moreover, the reaction time at this time is preferably 60 to 500 minutes. Note that, during reaction or after reaction, a solvent that does not react with the isocyanate group can be added. As such a solvent, for example, acetone, methyl ethyl ketone, toluene, and tetrahydrofuran can be used. At this time, if necessary, a reaction catalyst such as dibutyltin dilaurate, stannous octoate, dibutyltin di-2-ethylhexoate, triethylamine, triethylenediamine, N-methylmorpholine, or bismuth tris(2-ethylhexanoate), or a reaction inhibitor such as phosphoric acid, sodium hydrogen phosphate, para-toluenesulfonic acid, adipic acid, or benzoyl chloride may be added.

(Neutralization)

In the case where a diol compound having a carboxylate group is not used as (B2), or in the case where, even when a diol compound having a carboxylate group is used as (B2), the amount thereof used is not enough to satisfy a predetermined neutralization rate of the polyurethane resin, the carboxy group of the prepolymer can be neutralized using any neutralizing agent so that the polyurethane resin has the predetermined neutralization rate. As described above, an isocyanate group-terminated prepolymer, which has a carboxy group can be appropriately neutralized using a known method before or after preparation of the isocyanate group-terminated prepolymer, which has a carboxy group. Examples of the neutralizing agent used for such neutralization include, for example, amines such as trimethylamine, triethylamine, tri-n-propylamine, tributylamine, N-methyl-diethanolamine, N,N-dimethyl monoethanolamine(2-(dimethylamino)ethanol), N,N-diethyl monoethanolamine, and triethanolamine; potassium hydroxide, sodium hydroxide, and ammonia. Among them, tertiary amines such as trimethylamine, triethylamine, tri-n-propylamine, N,N-dimethyl monoethanolamine(2-(dimethylamino)ethanol), and tributylamine are particularly preferable. Preferably, the total number of moles of the carboxylate group relative to the total number of moles of the carboxylate group and the carboxy group included in the obtained polyurethane resin is 40 mol% or more. In one embodiment of the present invention, the total number of moles of the carboxylate group relative to the total number of moles of the carboxylate group and the carboxy group included in the obtained polyurethane resin is 40 to 100 mol%, or 50 to 80 mol%.

(Emulsification)

Then, the isocyanate group-terminated prepolymer is preferably emulsified and dispersed in water. The emulsifying equipment used for emulsification and dispersion in water is not particularly limited, and examples thereof include homomixers, homogenizers, and dispersers. During emulsification and dispersion, the prepolymer is preferably emulsified and dispersed in water at a temperature range of 0 to 40°C particularly without using an emulsifier, thereby suppressing the reaction between the isocyanate group and water as much as possible. Furthermore, during emulsification and dispersion in this manner, a reaction inhibitor such as phosphoric acid, sodium dihydrogen phosphate, disodium phosphate, para-toluenesulfonic acid, adipic acid, or benzoyl chloride can be added if necessary.

(Chain Extension)

Then, the prepolymer is allowed to contact with (C) that can function as a chain extender and, if necessary, with other crosslinking agents to perform a chain extension reaction or a crosslinking reaction. For example, the chain of the urethane prepolymer containing an isocyanate group at a terminal, which has been emulsified and dispersed in water, is extended using a chain extender. The reaction between the urethane prepolymer containing an isocyanate group at a terminal and (C) is typically completed at a reaction temperature of 20 to 50°C, within 30 to 120 minutes after the urethane prepolymer containing an isocyanate group at a terminal and (C) are mixed.

(Solvent Removal)

In the above, when an organic solvent is used, it is preferably removed. As the removal conditions, the solvent is desirably distilled off under reduced pressure at 30 to 80°C.

The resin dispersion liquid of the present invention contains water. According to one embodiment of the present invention, the mass of the polyurethane resin (resin solid content) relative to the total mass of the resin dispersion liquid is in a range of 20 to 60% by mass. Note that, the concentration of the resin solid content in the resin dispersion liquid can be also adjusted by adding or distilling off water. According to one embodiment of the present invention, the resin dispersion liquid does not contain an organic solvent, or even if it contains the solvent, the mass of the organic solvent/the mass of the polyurethane resin is less than 1.0, preferably 0.5 or less, and more preferably 0.1 or less. Such an embodiment improves the stability of the resin dispersion liquid.

According to the production method through such a prepolymer, a polyurethane resin can be obtained that has a constituent unit derived from the prepolymer having an isocyanate group at a terminal, which has a constituent unit derived from (A) and a constituent unit derived from (B), and a constituent unit derived from the (C).

A glass transition temperature (Tg) of the polyurethane resin is not particularly limited, but is preferably low because the texture is hardly hardened even after image formation. The Tg of the polyurethane resin water dispersion liquid is 0°C or less, and is preferably -80°C to 0°C.

The Tg can be calculated as the temperature showing the peak (maximum value) in the temperature dependency of the loss tangent (tan $\delta$), which is the ratio (E"/E') between E' and the loss modulus (E"), measured by dynamic viscoelasticity measurement of a dried film (film-like sample) of the polyurethane resin dispersion liquid.

The volume average particle diameter (d50) of the polyurethane resin is not particularly limited, but from the viewpoint of preventing nozzle clogging of an inkjet head, it is preferably 300 nm or less, and more preferably 130 nm or less. The lower limit of d50 may be, for example, 10 nm. According to one embodiment of the present invention, the volume average particle diameter (d50) of the polyurethane resin is 10 nm to 300 nm. Note that, the volume average particle diameter (d50) of the polyurethane resin is measured using a dynamic light scattering particle size distribution measurement device, and is the 50% particle diameter when the cumulative volume in the cumulative volume particle size distribution is 50% from the side of the small particle diameter.

<Ink for Inkjet>

One embodiment of the present invention provides ink for inkjet by containing the resin dispersion liquid of the present invention and a colorant.

(Polyurethane Resin)

The ink for inkjet (ink) contains the polyurethane resin of the present invention. The total mass of the polyurethane resin relative to the total mass of the ink for inkjet may be 5 to 20% by mass, and is preferably 5 to 10% by mass, in terms of the solid content.

(Water-Soluble Organic Solvent)

The ink for inkjet may contain a water-soluble organic solvent. The water-soluble organic solvent is not particularly limited as long as it is compatible with water. Examples thereof include: polyhydric alcohols (for example, dihydric alcohols such as ethylene glycol, diethylene glycol, triethylene glycol, polyethylene glycol, propylene glycol, dipropylene glycol, tripropylene glycol, and polypropylene glycol, and trihydric or higher alcohols such as glycerin, trimethylolpropane, and hexanetriol); polyhydric alcohol ethers (for example, ethylene glycol monomethyl ether, ethylene glycol monoethyl ether, ethylene glycol monobutyl ether, ethylene glycol monophenyl ether, diethylene glycol monomethyl ether, diethylene glycol monoethyl ether, diethylene glycol monobutyl ether, diethylene glycol dimethyl ether, propylene glycol monomethyl ether, and propylene glycol monoethyl ether); monohydric alcohols (for example, methanol, ethanol, propanol, pentanol, hexanol, cyclohexanol, and benzyl alcohol); amines (for example, ethanol amine, N-ethyldiethanolamine, morpholine, N-ethylmorpholine, ethylenediamine, diethylenediamine, and triethylenetetramine); amides (for example, formamide, N,N-dimethylformamide, N,N-dimethylacetamide); heterocyclic compounds (for example, 2-pyrrolidone, N-methyl-2-pyrrolidone, N-cyclohexyl-2-pyrrolidone, 2-oxazolidone, 1,3-dimethyl-2-imidazolidine); sulfoxides (for example, dimethyl sulfoxide); and sulfones (for example, sulfolane).

Among them, the water-soluble organic solvent preferably contains polyhydric alcohols because it is easy to appropriately increase the viscosity of the ink. The polyhydric alcohols preferably contain trihydric or higher alcohols, and more preferably contain glycerin, because it is easy to increase the viscosity of the ink. Specifically, the mass of the polyhydric alcohols is preferably 1 to 50% by mass, or 2 to 45% by mass relative to the total mass of the ink.

In addition, the ink preferably contains heterocyclic compounds such as 2-pyrrolidone. Specifically, the mass of the heterocyclic compounds is preferably 1 to 20% by mass, 2 to 15% by mass, or 3 to 8% by mass, relative to the total mass of the ink.

(Colorant)

As the colorant, a pigment is preferably used. The pigment is not particularly limited, and may be, for example, an organic pigment or an inorganic pigment having the following numbers listed in the Color Index. The colorant may also be a solid colorant.

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, and 36.

Examples of blue or cyan pigments include Pigment Blue 1, 15, 15:1, 15:2, 15:3, 15:4, 15:6, 16, 17-1, 22, 27, 28, 29, 36, and 60.

Examples of green pigments include Pigment Green 7, 26, 36, and 50. Examples of yellow pigments include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193.

Examples of black pigments include Pigment Black 7, 28, and 26.

Examples of commercially available pigments include CHROMOFINE Yellow 2080, 5900, 5930, AF-1300, and 2700L, CHROMOFINE Orange 3700L and 6730, CHROMOFINE Scarlet 6750, CHROMOFINE Magenta 6880, 6886, 6891N, 6790, and 6887, CHROMOFINE Violet RE, CHROMOFINE Red 6820 and 6830, CHROMOFINE Blue HS-3, 5187, 5108, 5197, 5085N, SR-5020, 5026, 5050, 4920, 4927, 4937, 4824, 4933GN-EP, 4940, 4973, 5205, 5208, 5214, 5221, 5000P, CHROMOFINE Green 2GN, 2GO, 2G-550D, 5310, 5370, and 6830, CHROMOFINE Black A-1103, SEIKAFAST Yellow 10GH, A-3, 2035, 2054, 2200, 2270, 2300, 2400(B), 2500, 2600, ZAY-260, 2700(B), and 2770, SEIKAFAST Red 8040, C405 (F), CA120, LR-116, 1531B, 8060R, 1547, ZAW-262, 1537B, GY, 4R-4016, 3820, 3891, ZA-215, SEIKAFAST Carmine 6B1476T-7, 1483LT, 3840, and 3870, SEIKAFAST Bordeaux 10B-430, SEIKALIGHT Rose R40, SEIKALIGHT Violet B800 and 7805, SEIKAFAST Maroon 460N, SEIKAFAST Orange 900 and 2900, SEIKALIGHT Blue C718 and A612, Cyanine blue 4933M, 4933GN-EP, 4940, and 4973 (manufactured by Dainichiseika Color & Chemicals Mfg. Co., Ltd.); KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103, 104, 105, 106, 111, 118, 124, KET Green 201 (manufactured by DIC); Colortex Yellow 301, 314, 315, 316, P-624, 314, U10GN, U3GN, UNN, UA-414, U263, Finecol Yellow T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818, P-908, 510, Colortex Green 402, 403, Colortex Black 702, U905 (manufactured by SANYO COLOR WORKS, Ltd.); Lionol Yellow 1405G, Lionol Blue FG7330, FG7350, FG7400G, FG7405G, ES, and ESP-S (manufactured by TOYO INK CO., LTD.), Toner Magenta E02, Permanent Rubin F6B, Toner Yellow HG, Permanent Yellow GG-02, Hostapeam BlueB2G (manufactured by Hoechst Industry); Novoperm P-HG, Hostaperm Pink E, Hostaperm Blue B2G (manufactured by Clariant); carbon black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

A dye may be used as the colorant. The dye is suitably a solid dye, and may be, for example, a disperse dye.

Examples of the disperse dye include C.I. Disperse Yellow: 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232; C. I. Disperse Orange: 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, 142; C. I. Disperse Red: 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328, 337, 343; C. I. Disperse Violet: 1, 4, 8, 23, 26, 27, 28, 31, 33, 35, 36, 38, 40, 43, 46, 48, 50, 51, 52, 56, 57, 59, 61, 63, 69, 77; C. I. Disperse Green 9; C. I. Disperse Brown: 1, 2, 4, 9, 13, 19; C. I. Disperse Blue: 3, 7, 9, 14, 16, 19, 20, 26, 27, 35, 43, 44, 54, 55, 56, 58, 60, 62, 64, 71, 72, 73, 75, 77, 79, 79:1, 79:2, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 281, 284, 285, 287, 288, 291, 291:1, 293, 295, 297, 301, 315, 330, 333, 373; C.I. Disperse Black 1, 3, 10, and 24.

Among them, pigments are preferable as the colorant because they have good dispersibility in the constituent components of the ink and have excellent weather resistance.

The content of the colorant is not particularly limited, but is preferably 1 to 15% by mass relative to the total mass of the ink because the viscosity of the ink can be easily adjusted within the above range and an image with a high density can be formed. When the content mass ratio of the colorant is 1% by mass or more, the viscosity of the ink may be appropriately increased and an image with a high density can be also easily formed. When the content mass ratio of the colorant is 15% by mass or less, the viscosity of the ink is not too high, and the nozzle clogging or the like is unlikely to occur. The content of the colorant is more preferably 1.5 to 15% by mass, and still more preferably 2 to 12% by mass relative to the total mass of the ink, from the same viewpoint.

(Other Components)

The inkjet ink may further contain other components if necessary. Examples of the other components include solvents, surfactants, preservatives, antifungal agents, rust-preventive agents, and pH adjusters.

Surfactant

Examples of the surfactants used include anionic surfactants, cationic surfactants, amphoteric surfactants, and nonionic surfactants. Examples of the anionic surfactants include fatty acid salts, alkyl sulfate salts, alkyl sulfate esters, alkyl benzene sulfonate salts, alkylnaphthalenesulfonate salts, dialkylsulfosuccinate salts, alkyl phosphate ester salts, condensates of alkylnaphthalenesulfonic acid with formalin, and polyoxyethylene alkyl sulfate ester salts. Examples of the cationic surfactants include amine salts, tetraalkyl quaternary ammonium salts, trialkyl quaternary ammonium salts, alkylpyridinium salts, and alkylquinolinium salts. Examples of the nonionic surfactants include polyethylene glycol alkyl ether, polyethylene glycol alkylphenyl ether, polyethylene glycol fatty acid esters, polyethylene glycol sorbitan fatty acid esters, polyethylene glycol alkyl amine, ethylene oxide adducts of polypropylene glycol, acetylenic glycol, and ethylene oxide adducts of acetylenic glycol. Examples of the surfactants include polyethylene glycol-modified silicone.

The content of the surfactant is more preferably 0.01 to 5% by mass, and still more preferably 0.05 to 1% by mass, relative to the total mass of the ink.

Preservative, Antifungal Agent

Examples of the preservatives or the antifungal agents include aromatic halogen compounds (for example, Preventol (registered trademark) CMK), methylene dithiocyanate, halogen-containing nitrogen and sulfur compounds, and 1,2-benzisothiazolin-3-one (for example, Proxel (registered trademark, hereinafter, the same applies) GXL).

pH Adjuster

Examples of the pH adjusters include urea and sodium hydroxide.

The present invention encompasses the following aspects and embodiments.

[1] A resin dispersion liquid for inkjet ink, comprising:
a polyurethane resin having a constituent unit derived from (A) polyisocyanate, a constituent unit derived from (B) polyol, and a constituent unit derived from (C) polyamine; and water, wherein the (B) polyol includes (B1) polyether polyol and (B2) diol compound having a carboxy group and/or a carboxylate group, and the (C) polyamine includes (C1) first polyamine having two groups selected from an amino group, an imino group, and a hydrazide group, and (C2) second polyamine having three or four groups selected from an amino group, an imino group, and a hydrazide group.

[2] The resin dispersion liquid according to [1], wherein the polyurethane resin has: a constituent unit derived from a prepolymer having an isocyanate group at a terminal, which has a constituent unit derived from the (A) and a constituent unit derived from the (B); and a constituent unit derived from the (C).

[3] The resin dispersion liquid according to [1] or [2], wherein the polyurethane resin includes a carboxylate group.

[4] The resin dispersion liquid according to any one of [1] to [3], wherein a total number of moles of the carboxylate group relative to a total number of moles of the carboxylate group and the carboxy group included in the polyurethane resin is 40 mol% or more.

[5] The resin dispersion liquid according to any one of [1] to [4], wherein a total number of moles of the (C2) relative to a total number of moles of the (C1) and the (C2) is 1.0 to 96.0 mol%.

[6] The resin dispersion liquid according to any one of [1] to [5], wherein an acid number of the polyurethane resin is 5 mg KOH/g or more and less than 30 mg KOH/g.

[7] The resin dispersion liquid according to any one of [1] to [6], wherein a total number of moles of a hydroxy group included in the (B) relative to a total number of moles of an isocyanate group included in the (A) is 70 to 90 mol%.

[8] The resin dispersion liquid according to any one of [1] to [7], wherein the (B) includes no alicyclic structure.

[9] The resin dispersion liquid according to any one of [1] to [8], wherein a total number of moles of the (B1) and the (B2) relative to a total number of moles of the (B) is 50 mol% or more.

[10] The resin dispersion liquid according to any one of [1] to [9], wherein a total number of moles of the (C1) and the (C2) relative to a total number of moles of the (C) is 80 mol% or more.

[11] The resin dispersion liquid according to any one of [1] to [10], wherein the (B1) polyether polyol is polyalkylene ether glycol, and the number of carbon atoms of alkylene in polyalkylene ether glycol is preferably 2 to 6, more preferably 2 to 5, even more preferably 2 to 4, and particularly preferably 3 or 4.

[12] The resin dispersion liquid according to any one of [1] to [11], wherein the mass of the (B1) polyether polyol relative to the total mass of the (B1) polyether polyol contained in (B) and the polycarbonate polyol and the polyester polyol that may be contained in (B) is preferably 40 to 100% by mass, and more preferably 50 to 100% by mass.

[13] The resin dispersion liquid according to any one of [1] to [12], wherein the total number of moles of the low molecular polyhydric alcohol relative to the total number of moles of the (B) polyol is preferably 0 to 50 mol%, and more preferably 0 to 40 mol%.

[14] The resin dispersion liquid according to any one of [1] to [13], wherein the total mass of the low molecular polyhydric alcohol relative to the total mass of the (B) polyol is preferably 0 to 5.0% by mass, and more preferably 0 to 4.0% by mass.

[15] The resin dispersion liquid according to any one of [1] to [14], wherein the total number of moles of the (B1) and the (B2) relative to the total number of moles of the (B) polyol is preferably 50 to 100 mol%, and more preferably 60 to 100 mol%.

[16] The resin dispersion liquid according to any one of [1] to [15], wherein the number of moles of the (B2) relative to the total number of moles of the (B) is preferably more than 45 mol% to 70 mol% or less, more preferably 47 to 65 mol%, and particularly preferably 49 to 60 mol%.

[17] The resin dispersion liquid according to any one of [1] to [16], wherein the total number of moles of the carboxylate group relative to the total number of moles of the carboxylate group and the carboxy group included in the polyurethane resin is preferably 40 to 100 mol%, and more preferably 50 to 80 mol%.

[18] The resin dispersion liquid according to any one of [1] to [17], wherein the total number of moles of (C1) and (C2) relative to the total number of moles of (C) is preferably 80 to 100 mol%, more preferably 85 to 100 mol%, and even more preferably 90 to 100 mol%.

[19] The resin dispersion liquid according to any one of [1] to [18], wherein the total mass of (C1) and (C2) relative to the total mass of (C) is preferably 80 to 100% by mass, more preferably 85 to 100% by mass, and even more preferably 90 to 100% by mass.

[20] The resin dispersion liquid according to any one of [1] to [19], wherein the total number of moles of (C2) relative to the total number of moles of (C1) and (C2) is preferably 4.0 to 65 mol%, and more preferably 10 to 35 mol%.

[21] The resin dispersion liquid according to any one of [1] to [20], wherein the mass of (C2) relative to the total mass of (C1) and (C2) is preferably 2.0 to 98.0% by mass, more preferably 5.0 to 60.0 by mass, and more preferably 15.0 to 40.0 by mass.

[22] The resin dispersion liquid according to any one of [1] to [21], wherein preferably 65 to 100 mol%, more preferably 70 to 90 mol%, and even more preferably 75 to 85 mol% of the total number of moles of all constituent units included in the polyurethane resin consists of a constituent unit derived from the (A), a constituent unit derived from the (B1), a constituent unit derived from the (B2), a constituent unit derived from the (C1), and a constituent unit derived from the (C2).

[23] The resin dispersion liquid according to any one of [1] to [22], wherein the resin dispersion liquid does not contain an organic solvent, or even if it contains the solvent, the mass of the organic solvent/the mass of the polyurethane resin is preferably less than 1.0, 0.9 or less, 0.8 or less, 0.7 or less, 0.6 or less, 0.5 or less, 0.4 or less, 0.3 or less, 0.2 or less, or 0.1 or less.

[24] The resin dispersion liquid according to any one of [1] to [23], wherein 65 mol% or more of a total number of moles of all constituent units included in the polyurethane resin consists of a constituent unit derived from the (A), a constituent unit derived from the (B1), a constituent unit derived from the (B2), a constituent unit derived from the (C1), and a constituent unit derived from the (C2).

Examples

Hereinafter, specific examples of the present invention will be described, but the present invention is not limited thereto.

<Synthesis of Polyurethane Resin>

(Example 1)

In a four-neck flask equipped with a stirrer, a reflux condenser, a thermometer, and a nitrogen blowdown tube, 205.6 parts by mass of (B1) polytetramethylene glycol (number average molecular weight 2,000) and 14.9 parts by mass of (B2) dimethylol propionic acid as (B) and 123.4 parts by mass of methyl ethyl ketone as a solvent were weighed, and were homogeneously mixed. Then, 67.3 parts by mass of dicyclohexylmethane diisocyanate as (A) was added thereto, which was allowed to react at 85 ± 5°C for 300 minutes, to thereby obtain a methyl ethyl ketone solution of a urethane prepolymer containing an isocyanate group at a terminal, which had a content of the isocyanate group of 1.30% by mass. After that, the methyl ethyl ketone solution was cooled, and 9.9 parts by mass of dimethylaminoethanol was added thereto at 40°C, to perform the neutralization reaction. Next, 708.8 parts by mass of water was gradually added thereto under stirring, to emulsify and disperse the urethane prepolymer containing an isocyanate group at a terminal. To this emulsified and dispersed solution, 1.6 parts by mass of (C1) hydrazine monohydrate and 0.6 parts by mass of (C2) diethylenetriamine as (C) were added, and were stirred at 40 ± 5°C for 90 minutes. After that, a solvent removal treatment (treatment of removing methyl ethyl ketone) was performed under reduced pressure at 40°C, to obtain a polyurethane resin dispersion liquid in which the solid content of the polyurethane resin was 30.0% by mass.

(Examples 2 to 11, and Comparative Examples 1 to 6)

A polyurethane resin dispersion liquid was obtained in the same manner as in Example 1 except that the kinds and amounts of (B), (A), and (C) were changed as described in Table 1. Note that, blank spaces in the table indicate that the corresponding component was not added.

<Storage Stability>

200 g of the synthesized polyurethane resin dispersion liquid was sealed in a 200 mL transparent bottle and was allowed to stand in a 60°C oven for one month, and the presence or absence of precipitations of the resin components was visually evaluated. The following B rating is acceptable for practical use.

A: No precipitation of the resin components in the dispersion liquid was found.

B: Water floated on the surface of the dispersion liquid, but no precipitation of the resin components was found.

C: Precipitation of the resin components in the dispersion liquid was found.

<Measurement of Glass Transition Temperature>

The polyurethane resin dispersion liquid was coated on a release film so that the thickness of the dry resin film was 400 $\mu$m. After it was allowed to stand at room temperature of 20°C and humidity of 65% RH for 48 hours, followed by a heat treatment in a dryer at 120°C for 45 minutes to produce a polyurethane resin film. This polyurethane resin film was peeled off from the release film and was cut into strips of a size suitable for dynamic viscoelasticity measurement to prepare a polyurethane resin sample. The dynamic viscoelasticity of this polyurethane resin sample was measured using a dynamic viscoelasticity measurement device (product name "DMA7100", manufactured by Hitachi High-Tech Corporation) under the conditions of a tensile mode, a frequency of 10 Hz, a temperature of -120 to 180°C, and a heating rate of 5°C /min. The graph was made showing the temperature dependence (horizontal axis is temperature) of the storage modulus (E'), loss modulus (E"), and loss tangent (tan$\delta$) obtained from this measurement. The temperature showing the peak in the temperature dependence of tan$\delta$ was considered as the glass transition temperature (°C).

<Volume Average Particle Diameter>

The polyurethane resin dispersion liquid was 60-fold diluted using ion-exchanged water, and a dynamic light scattering particle size distribution measurement device ("Zetasizer Nano ZS", manufactured by Malvern Panalytical) was used to measure the diluted liquid to determine the volume average particle diameter d50 of the polyurethane resin.

<Texture of Printed Matter>

(Preparation of Ink)

3% by mass of a solid colorant Pigment Black 7, 33% by mass of a polyurethane resin dispersion liquid having a solid content of 30% by mass, 4% by mass of 2-pyrrolidone, 5% by mass of glycerin, 0.1% by mass of a preservative Proxel GXL (1,2-benzisothiazolin-3-one), and 0.1% by mass of a surfactant KF-351A (polyethylene glycol modified silicone, manufactured by Shin-Etsu Chemical Co., Ltd.) were added, and water was added thereto so that the total was 100% by mass, to prepare ink. The ink contains 10% by mass of the polyurethane resin in terms of a solid content.

(Method of Printing Test)

The prepared ink was ejected from a nozzle of a inkjet head of a simple printing tester to form a 100% solid image on a cloth (cotton satin 60). Specifically, a solid image of 200 mm $\times$ 200 mm was formed at 540 dpi of the horizontal scan and 720 dpi of the vertical scan. dpi represents the number of ink liquid droplets (dots) per 2.54 cm. The ejection rate was adjusted so that the amount of the ink adhered was 15 g/m$^2$. After that, it was dried at 150°C for 3 minutes in a belt conveyer drier to obtain an image formed product.

· Evaluation Criteria of Texture

The obtained image formed product was evaluated according to the following criteria, with the bending stress B value calculated using a pure bending tester (KES-FB2-A) manufactured by KATO TECH CO., LTD. being considered as an index. The following B rating is acceptable for practical use.

A: B value of less than 1.5 times with respect to that before image formation, a level where no change in texture is noticeable in the sensory evaluation

B: B value of 1.5 or more and less than 3 times with respect to that before image formation, a level where a change in texture is somewhat noticeable in the sensory evaluation

C: B value of 3 times or more with respect to that before image formation, a level where the texture is problematic in the sensory evaluation

<Test Method of Liquid droplet Forming Property>

Using a liquid droplet observation device equipped with a stroboscope, a camera, and an inkjet head KM1024 manufactured by KONICA MINOLTA, INC., the ink flying state was observed with a high-speed camera at a position 1 mm from the nozzle surface while the liquid droplet rate was changed through adjustment of the ejection drive voltage in an environment of 25°C and 50% RH, and the satellite generation rate was measured.

· Evaluation Criteria

From the measurement results with the liquid droplet observation device, when the satellite generation rate was 6.0 m/s or more, it was determined that the ink characteristics were suitable for a printing device. The following A rating is preferable for practical use.

A: The satellite generation rate is 6.0 m/s or more.

C: The satellite generation rate is less than 6.0 m/s.

[Table 1]

| Unit: mol (mol when isocyanate is converted in 100 mol) | | Monomer | Number of functional groups | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|---|---|---|---|---|---|
| B | B1 | Polytetramethylene glycol (Molecular weight:2,000) | 2 | 40.0 | 40.0 | 33.3 | 40.0 | 40.0 | 40.0 | 30.0 | 40.0 | 20.0 | 20.0 | 39.8 | 40.0 | 40.0 | 40.0 | 40.0 | | |
| | | Polyester polyol (Molecular weight:2,000) | 2 | | | | | | | | | 20.0 | | | | | | | 40.0 | |
| | | Polycarbonate diol (Molecular weight:2,000) | 2 | | | | | | | | | 20.0 | | | | | | | | 40.0 |
| | | 1,4-Butanediol (Molecular weight:90) | 2 | | | | 31.3 | | | | 33.8 | | | | | | | | | |
| | B2 | Dimethylol propionic acid (Molecular weight:134) | 2 | 43.3 | 43.3 | 50.0 | 12.0 | 43.3 | 43.3 | 53.3 | 9.5 | 43.3 | 43.3 | 43.5 | 43.3 | 43.3 | 43.3 | 43.3 | 43.3 | 43.3 |
| A | | Dicyclohexylmethane diisocyanate (Molecular weight:262) | 2 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| | | Hexamethylene diisocyanate (Molecular weight:168) | 2 | | | | | | | | | | | | | | | | | |
| Neutralization amine | | Dimethylaminoethanol (Molecular weight:89) | 1 | 43.3 | 43.3 | 50.0 | 12.0 | 43.3 | 43.3 | 53.3 | 9.5 | 43.3 | 43.3 | 43.5 | 43.3 | 43.3 | 43.3 | 43.3 | 43.3 | 43.3 |
| C | C1 | Hydrazine monohydrate (Molecular weight:50) | 2 | 12.4 | 12.4 | 12.4 | 12.4 | 15.6 | 0.5 | 12.4 | 12.4 | 12.4 | 12.4 | | 15.8 | | 12.4 | 12.4 | 12.4 | 12.4 |
| | | 1,3-Bisaminomethylcyclohexane (Molecular weight:142) | 2 | | | | | | | | | | | 9.0 | | | | | | |
| | C2 | Diethylenetriamine (Molecular weight:103) | 3 | 2.3 | | 2.3 | 2.3 | 0.2 | 10.2 | 2.3 | 2.3 | 2.3 | 2.3 | | | 10.6 | | | 2.3 | 2.3 |
| | | Triethylenetetramine (Molecular weight:146) | 4 | | 1.7 | | | | | | | | | 3.4 | | | | | | |
| | | Tetraethylenepentamine (Molecular weight:189) | 5 | | | | | | | | | | | | | | 1.4 | | | |
| Extension alcohol | | Trimethylolpropane (Molecular weight:134) | 3 | | | | | | | | | | | | | | | | 2.30 | |
| | | Acid number (mg KOH/g) | | 21.5 | 21.5 | 27.9 | 6.0 | 21.5 | 21.5 | 31.8 | 4.8 | 21.5 | 21.5 | 21.5 | 21.6 | 21.5 | 21.5 | 21.6 | 21.5 | 21.5 |
| | | Glass transition temperature (°C) | | -49 | -49 | -49 | -45 | -49 | -49 | -49 | -45 | -30 | -25 | -49 | -49 | -49 | -49 | -49 | -25 | -15 |
| | | Volume average particle diameter (nm) | | 50 | 49 | 35 | 110 | 52 | 50 | 30 | 120 | 50 | 52 | 53 | 51 | 50 | 52 | 52 | 50 | 53 |
| | | C2/(C1+C2) (mol%) | | 15.7 | 12.2 | 15.7 | 15.7 | 1.2 | 95.3 | 15.7 | 15.7 | 15.7 | 15.7 | 27.5 | 0.0 | 100.0 | 0.0 | 0.0 | 15.7 | 15.7 |
| Results | | Stability | | A | A | A | A | A | A | A | B | A | A | A | A | A | C | A | A | A |
| | | Liquid droplet forming property | | A | A | A | A | A | A | A | A | A | A | A | C | A | A | C | C | C |
| | | Texture of printed matter | | A | A | A | A | A | A | B | A | A | A | A | A | C | C | A | B | C |

[Table 2]

| | | Unit: Parts by mass Monomer | Number of functional groups | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|---|---|---|---|---|---|
| B | B1 | Polytetramethylene glycol (Molecular weight:2,000) | 2 | 205.6 | 205.6 | 190.7 | 213.2 | 205.7 | 205.2 | 181.9 | 213.9 | 102.8 | 102.8 | 203.6 | 205.7 | 205.2 | 205.2 | 205.5 | | |
| | | Polyester polyol (Molecular weight:2,000) | 2 | | | | | | | | | 102.8 | | | | | | | 205.6 | |
| | | Polycarbonate diol (Molecular weight:2,000) | 2 | | | | | | | | | | 102.8 | | | | | | | 205.6 |
| | | 1,4-Butanediol (Molecular weight:90) | 2 | | | | 7.5 | | | | 8.1 | | | | | | | | | |
| | B2 | Dimethylol propionic acid (Molecular weight:134) | 2 | 14.9 | 14.9 | 19.2 | 4.3 | 14.9 | 14.9 | 21.7 | 3.4 | 14.9 | 14.9 | 14.9 | 14.9 | 14.9 | 14.9 | 14.9 | 14.9 | 14.9 |
| A | | Dicyclohexylmethane diisocyanate (Molecular weight:262) | 2 | 67.3 | 67.3 | 74.9 | 69.8 | 67.4 | 67.2 | 79.4 | 70.0 | 67.3 | 67.3 | 67.0 | 67.4 | 67.2 | 67.2 | 67.3 | 67.3 | 67.3 |
| | | Hexamethylene diisocyanate (Molecular weight:168) | 2 | | | | | | | | | | | | | | | | | |
| Neutralization amine | | Dimethylaminoethanol (Molecular weight:89) | 1 | 9.9 | 9.9 | 12.7 | 2.8 | 9.9 | 9.9 | 14.4 | 2.3 | 9.9 | 9.9 | 9.9 | 9.9 | 9.9 | 9.9 | 9.9 | 9.9 | 9.9 |
| C | C1 | Hydrazine monohydrate (Molecular weight:50) | 2 | 1.6 | 1.6 | 1.8 | 1.6 | 2.0 | 0.06 | 1.9 | 1.7 | 1.6 | 1.6 | | 2.0 | | 1.6 | 1.6 | 1.6 | 1.6 |
| | | 1,3-Bisaminomethylcyclohexane (Molecular weight:142) | 2 | | | | | | | | | | | 3.3 | | | | | | |
| | C2 | Diethylenetriamine (Molecular weight:103) | 3 | 0.6 | | 0.7 | 0.6 | 0.05 | 2.7 | 0.7 | 0.6 | 0.6 | 0.6 | | | 2.8 | | | 0.6 | 0.6 |
| | | Triethylenetetramine (Molecular weight:146) | 4 | | 0.6 | | | | | | | | | 1.3 | | | | | | |
| | | Tetraethylenepentamine (Molecular weight:189) | 5 | | | | | | | | | | | | | | 0.7 | | | |
| Extension alcohol | | Trimethylolpropane (Molecular weight:134) | 3 | | | | | | | | | | | | | | | 0.8 | | |
| | | Acid number (mg KOH/g) | | 21.5 | 21.5 | 27.9 | 6.0 | 21.5 | 21.5 | 31.8 | 4.8 | 21.5 | 21.5 | 21.5 | 21.6 | 21.5 | 21.5 | 21.6 | 21.5 | 21.5 |
| | | Glass transition temperature (°C) | | -49 | -49 | -49 | -45 | -49 | -49 | -49 | -45 | -30 | -25 | -49 | -49 | -49 | -49 | -49 | -25 | -15 |
| | | Volume average particle diameter (nm) | | 50 | 49 | 35 | 110 | 52 | 50 | 30 | 120 | 50 | 52 | 53 | 51 | 50 | 52 | 52 | 50 | 53 |
| | | C2/(C1+C2) (mass(%)) | | 27.7 | 29.0 | 27.7 | 27.7 | 2.4 | 97.7 | 27.7 | 27.7 | 27.7 | 27.7 | 28.1 | 0.0 | 100.0 | 0.0 | 0.0 | 27.7 | 27.7 |
| | Results | Stability | | A | A | A | A | A | A | A | B | A | A | A | A | A | C | A | A | A |
| | | Liquid droplet forming property | | A | A | A | A | A | A | A | A | A | A | A | C | A | A | C | C | C |
| | | Texture of printed matter | | A | A | A | A | A | A | B | A | A | A | A | A | C | C | A | B | C |

(Notes in Table 1)
Ex.: Example   Comp. Ex.: Comparative Example
Polyester polyol: Kuraray Polyol P-2010 (manufactured by Kuraray Co., Ltd.)   Polycarbonate diol: ETERNACOLL UH-200 (manufactured by UBE Corporation)

The present application is based on JP 2024-168275 and JP 2024-168278, filed on September 27, 2024, the disclosures of which are incorporated herein by reference in its entirety.

**Claims**

1. A resin dispersion liquid for inkjet ink, comprising:

   a polyurethane resin having a constituent unit derived from (A) polyisocyanate, a constituent unit derived from (B) polyol, and a constituent unit derived from (C) polyamine; and
   water,
   wherein the (B) polyol includes (B1) polyether polyol and (B2) diol compound having a carboxy group and/or a carboxylate group, and
   the (C) polyamine includes (C1) first polyamine having two groups selected from an amino group, an imino group, and a hydrazide group, and (C2) second polyamine having three or four groups selected from an amino group, an imino group, and a hydrazide group.

2. The resin dispersion liquid according to claim 1, wherein the polyurethane resin has:

   a constituent unit derived from a prepolymer having an isocyanate group at a terminal, which has a constituent unit derived from the (A) and a constituent unit derived from the (B); and
   a constituent unit derived from the (C).

3. The resin dispersion liquid according to claim 1, wherein the polyurethane resin includes a carboxylate group.

4. The resin dispersion liquid according to claim 1, wherein a total number of moles of the carboxylate group relative to a total number of moles of the carboxylate group and the carboxy group included in the polyurethane resin is 40 mol% or more.

5. The resin dispersion liquid according to claim 1, wherein a total number of moles of the (C2) relative to a total number of moles of the (C1) and the (C2) is 1.0 to 96.0 mol%.

6. The resin dispersion liquid according to claim 1, wherein an acid number of the polyurethane resin is 5 mg KOH/g or more and less than 30 mg KOH/g.

7. The resin dispersion liquid according to claim 1, wherein a total number of moles of a hydroxy group included in the (B) relative to a total number of moles of an isocyanate group included in the (A) is 70 to 90 mol%.

8. The resin dispersion liquid according to claim 1, wherein the (B) includes no alicyclic structure.

9. The resin dispersion liquid according to claim 1, wherein a total number of moles of the (B1) and the (B2) relative to a total number of moles of the (B) is 50 mol% or more.

10. The resin dispersion liquid according to claim 1, wherein a total number of moles of the (C1) and the (C2) relative to a total number of moles of the (C) is 80 mol% or more.

11. The resin dispersion liquid according to claim 1, wherein 65 mol% or more of a total number of moles of all constituent units included in the polyurethane resin consists of a constituent unit derived from the (A), a constituent unit derived from the (B1), a constituent unit derived from the (B2), a constituent unit derived from the (C1), and a constituent unit derived from the (C2).

## EUROPEAN SEARCH REPORT

**Application Number**

EP 25 20 4214

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 353 788 A1 (DAINIPPON INK & CHEMICALS [JP]) 17 April 2024 (2024-04-17) * Production Example 7 referring back to Production Example 1 * ----- | 1-11 | INV. C08G18/08 C08G18/12 C08G18/32 C08G18/48 |
| X | US 2023/323010 A1 (YAMASHITA TATSUYA [JP] ET AL) 12 October 2023 (2023-10-12) * example 7; table 2 * ----- | 1-11 | C08G18/75 C09D11/30 C08G18/40 C08G18/42 C08G18/44 |

**TECHNICAL FIELDS SEARCHED (IPC)**

C09D
C08G

The present search report has been drawn up for all claims

| Place of search | Date of completion of the search | Examiner |
|---|---|---|
| Munich | 4 February 2026 | Bergmeier, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

ANNEX TO THE EUROPEAN SEARCH REPORT ON EUROPEAN PATENT APPLICATION NO.

EP 4 717 719 A1

EP 25 20 4214

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| EP 4353788 A1 | 17-04-2024 | CN 117580916 A | 20-02-2024 |
| | | EP 4353788 A1 | 17-04-2024 |
| | | JP 7332071 B2 | 23-08-2023 |
| | | JP WO2023032689 A1 | 09-03-2023 |
| | | US 2024352180 A1 | 24-10-2024 |
| | | WO 2023032689 A1 | 09-03-2023 |
| US 2023323010 A1 | 12-10-2023 | CN 116209807 A | 02-06-2023 |
| | | EP 4206399 A1 | 05-07-2023 |
| | | JP 7522838 B2 | 25-07-2024 |
| | | JP WO2022045245 A1 | 03-03-2022 |
| | | KR 20230039709 A | 21-03-2023 |
| | | TW 202219101 A | 16-05-2022 |
| | | US 2023323010 A1 | 12-10-2023 |
| | | WO 2022045245 A1 | 03-03-2022 |

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020084013 A
- JP 6776775 B
- JP 2018015974 A

- JP 2024168275 A
- JP 2024168278 A